# EUROPEAN PATENT APPLICATION

(11) **EP 4 813 930 A1**
(43) Date of publication of application: **30.09.2026**
(21) Application number: 24894153.6
(22) Date of filing: 19.11.2024
(51) Int. Cl.: C02F 1/28, C02F 1/42, C02F 1/44, E03C 1/10

(54) **PURIFIED WATER PROVIDING SYSTEM AND PURIFIED WATER PROVIDING METHOD**

(30) Priority: 20.11.2023 JP 2023197017
(71) Applicant: Basic Co., Ltd., Otsu-shi, Shiga 520-2141 (JP)
(72) Inventor: SASAKI, Satoshi, Otsu-shi Shiga 520-2141 (JP)
(74) Representative: TBK
(86) International application number: PCT/JP2024/041053
(87) International publication number: WO 2025/110162

(57) **Abstract**

To enable long-term use of a cartridge, a purified water supply system 100 of the present invention includes: water purification cartridges 11 and 12 that reduce dissolved substances in raw water and allows purified water to flow out; flow paths 13, 14, 15, 16 and electric valves 21 configured to clean the water purification cartridges 11 and 12; a server 50 that determines whether the cleaning is necessary; and a microcomputer 22 that controls each of the electric valves 21 based on the determination result of the server 50.

## Description

### Technical Field

The present invention relates to a purified water supply system and a purified water supply method to purify raw water such as tap water or groundwater and supply the purified water as water for general household or commercial use.

### Background Art

The water purification effect of a water purifier gradually decreases as the period of use or the amount of use increases. Thus, the water purification cartridge is replaced after a certain period of use. If an inappropriate water purification cartridge is used in a water purifier, the water purifier will not be able to achieve the desired water purification effect. Thus, it is necessary to use a water purification cartridge suitable for the water purifier.

Patent Literature 1 describes a technique relating to a notification method for notifying a user that a water purification cartridge needs to be replaced. This notification method involves obtaining analysis information for each item on the water quality at each water purification plant via the internet, comparing the obtained analysis information with the standard value specified for each item, and if any analysis information exceeds the standard value, notifying the administrator of the water purification plant to change the water purification cartridge. According to this notification method, the administrator of the water purifier can be notified to change a water purification cartridge whose water purification effect has decreased, on the basis of the water quality analysis information.

Patent Literature 2 describes an automatic ordering system for consumables of water purifiers. The automatic ordering system receives orders for water purification cartridges and delivers new water purification cartridges to users of water purifiers, and includes a water purifier, a mobile communication device, and an EC server device. The water purifier is configured to detect the flow rate of purified water in the water purification mode, and determines when to replace the water purification cartridge based on an integrated value obtained by integrating the detected flow rates. When the water purifier determines that it is time to replace the cartridge, it automatically transmits order information including the product name and other information of the water purification cartridge to be purchased.

### Citation List

### Patent Literatures

Patent Literature 1: JP 2003-145143
Patent Literature 2: JP 2019-30831

### Summary of Invention

### Technical Problem

According to the description in the above patent literatures, it is possible to replace the water purification cartridge suitable for the water purifier currently in use at an appropriate time depending on its water purification performance. Replacing the water purification cartridge incurs costs, so there is a need to use the cartridge for longer periods of time to reduce these costs. Therefore, the present invention aims to provide a purified water supply system and a purified water supply method that enable long-term use of a cartridge.

### Solution to Problem

To achieve the aim, a purified water supply system of the present invention includes: a purification unit that reduces dissolved substances in raw water and allows purified water to flow out; a cleaning unit that performs cleaning of the purification unit; a cleaning determination unit that determines whether the cleaning is necessary; and a cleaning control unit that controls the cleaning unit on a basis of a result of the cleaning determination unit.

The purified water supply system of the present invention further includes a detection unit that outputs an index value indicating a state of the raw water and/or the purified water, wherein the cleaning determination unit determines whether the cleaning is necessary based on the index value.

In the purified water supply system of the present invention, the detection unit outputs a flow rate of the purified water, and the purified water supply system further includes a calculation unit that calculates a usage fee for the purification unit on a basis of an integrated value of the output flow rate.

In the purified water supply system of the present invention, the detection unit includes: a primary-side water pressure sensor that outputs a primary-side water pressure of the purification unit; and a secondary-side water pressure sensor that outputs a secondary-side water pressure of the purification unit, wherein the cleaning determination unit determines whether the cleaning is necessary based on a difference between the primary-side water pressure and the secondary-side water pressure.

The purified water supply system of the present invention further includes a replacement determination unit that determines whether the purification unit is to be replaced.

In the purified water supply system of the present invention, the cleaning control unit controls supply of purified water to a secondary side of the purification unit and controls discharge of water flowing out from a primary side of the cleaning unit.

The purified water supply system of the present invention includes a plurality of water purifiers; and a server capable of communicating with each of the plurality of water purifiers, wherein each of the water purifiers includes the purification unit, the cleaning unit, and the cleaning control unit, and the server includes the cleaning determination unit.

### Advantageous Effects of Invention

According to the present invention, the cartridge can be used for a long period of time while being cleaned and replaced as appropriate when the filtering capacity of the cartridge decreases.

### Brief Description of Drawings

FIG. 1 is a schematic diagram of a purified water supply system according to a first embodiment of the present invention.
FIG. 2(a) is a schematic diagram illustrating the state of flow paths of the water purifier in the water purification mode in the first embodiment, FIG. 2(b) is a schematic diagram illustrating the state of the flow paths of the water purifier in the first cleaning mode, and FIG. 2(c) is a schematic diagram illustrating the state of the flow paths of the water purifier in the second cleaning mode.
FIG. 3 illustrates the hardware of the water purifier according to the first embodiment.
FIG. 4 illustrates the content of database in the server according to the first embodiment.
FIG. 5 is a flowchart for the purified water supply system of the first embodiment.
FIG. 6 is a functional block diagram of the purified water supply system of the first embodiment.
FIG. 7(a) is a conceptual diagram of a water purifier in a purified water supply system according to a second embodiment, and FIG. 7(b) is a diagram illustrating the hardware of the water purifier.
FIG. 8 is a flowchart for the purified water supply system of the second embodiment.

### Description of Embodiments

### [First Embodiment]

The following is a description of the purified water supply system and the method of supplying purified water according to a first embodiment of the present invention, with reference to the drawings.

### <Overall configuration>

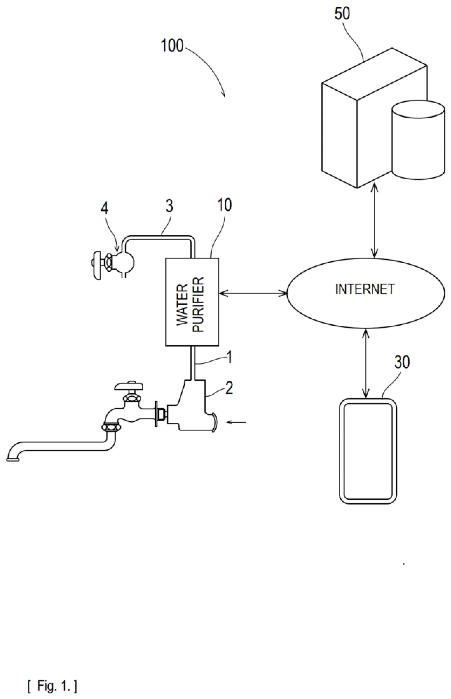

As illustrated in FIG. 1, a purified water supply system 100 according to the present embodiment purifies raw water such as tap water or groundwater and supplies it as water for general households. The purified water supply system 100 includes a water purifier 10 installed in a user's home, an information terminal 30 owned by the user, and a server 50 that is communicable with the water purifier 10 and the information terminal 30 via an internet communication line. Although FIG. 1 illustrates one water purifier 10 and one information terminal 30, when this system is used by multiple users, the system will include multiple water purifiers 10 each installed in a user's home, multiple information terminals 30 owned by the users, and a server 50 capable of communicating with the water purifiers 10 and information terminals 30.

### <Configuration of information terminal 30>

The information terminal 30 is a known smart device such as a smartphone or a tablet, or a known personal computer, and includes a network module that functions as a communication unit that communicates with the server 50 via an internet communication line, and a display that functions as a display unit that displays various information, as well as a CPU and memory. This memory stores an application for registering users of the system and checking usage status, and the CPU executes the application in response to user operations.

### <Configuration of water purifier 10>

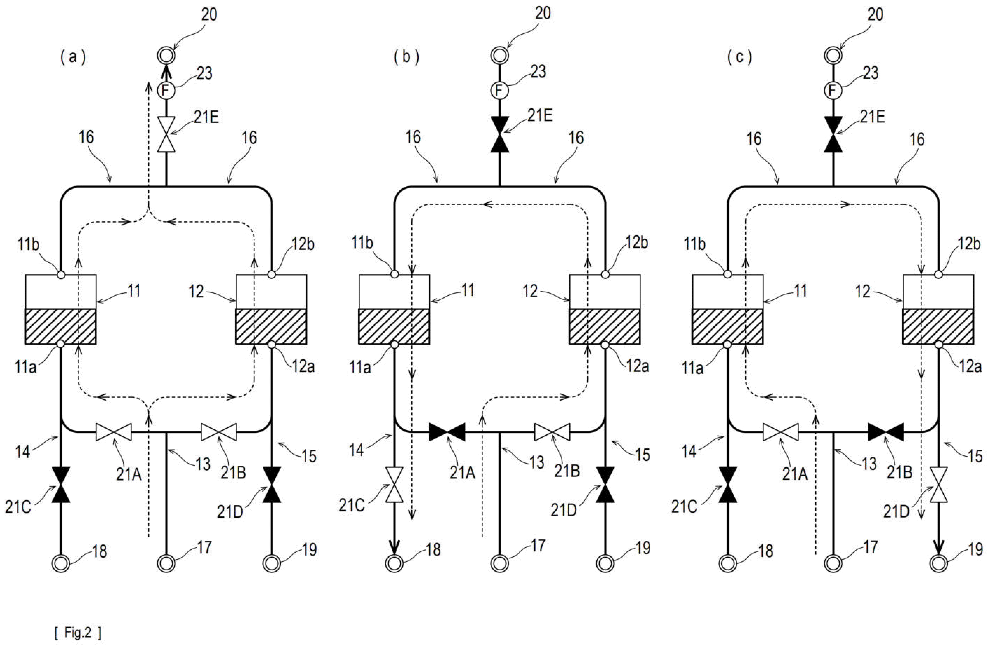

As illustrated in FIG. 1 and FIG. 2, the water purifier 10 is typically a stationary water purifier, with its primary side connected to a branch stop 2 via a hose 1 and its secondary side connected to a purified water faucet 4 via a hose 3. The water purifier 10 includes a pair of water purification cartridges 11 and 12 in the body of the water purifier 10. These water purification cartridges 11 and 12 contain filter media and function as a purification unit that enables the water purifier 10 to exhibit its water purification performance. The filter media may be materials such as activated carbon, woven fabric, nonwoven fabric, membranes (MF membrane, UF membrane, RO membrane), and ion exchange resin (JIS S 3241), which are used for the purpose of removing dissolved substances from water by filtration, adsorption, and others. In this embodiment, a hollow fiber membrane is used for this purpose.

The body of the water purifier 10 accommodates three flow paths 13, 14, and 15 (hereinafter referred to as "first flow path 13," "second flow path 14," and "third flow path 15") on the primary side of the pair of water purification cartridges 11 and 12. The first flow path 13 is for supplying raw water to primary side ports 11a and 12a of the pair of water purification cartridges 11 and 12, and includes paths from the raw water supply port 17 (the connection port to the hose through which raw water is supplied) to be branched to the primary side ports 11a and 12a of the water purification cartridge 11 and 12. The second flow path 14 is for discharging cleaning water (described later) that has been caused to flow backward within the water purification cartridge 11 on one side, and includes a path from the primary side port 11a of the water purification cartridge 11 to the discharge port 18. The third flow path 15 is for discharging cleaning water (described later) that has been caused to flow backward within the water purification cartridge 12 on the other side, and includes a path from the primary side port 12a of the water purification cartridge 12 to the discharge port 19.

The body of the water purifier 10 also accommodates one flow path 16 (hereinafter referred to as "fourth flow path 16") on the secondary side of the pair of water purification cartridges 11 and 12. The fourth flow path 16 is for flowing out purified water (treated water obtained by passing raw water through the water purification cartridges 11, 12 (forward flow)) to the purified water faucet 4, and includes flow paths from the secondary side ports 11b and 12b of the water purification cartridges 11 and 12 to join toward an outlet 20 of the water purifier 10.

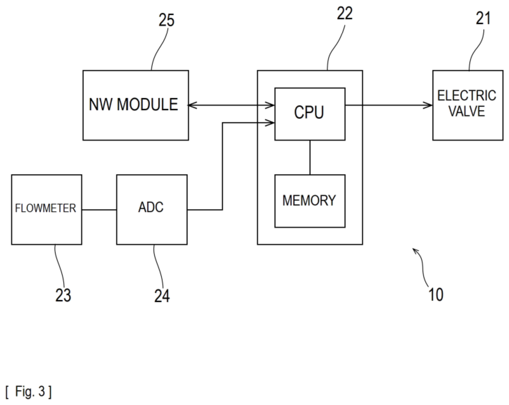

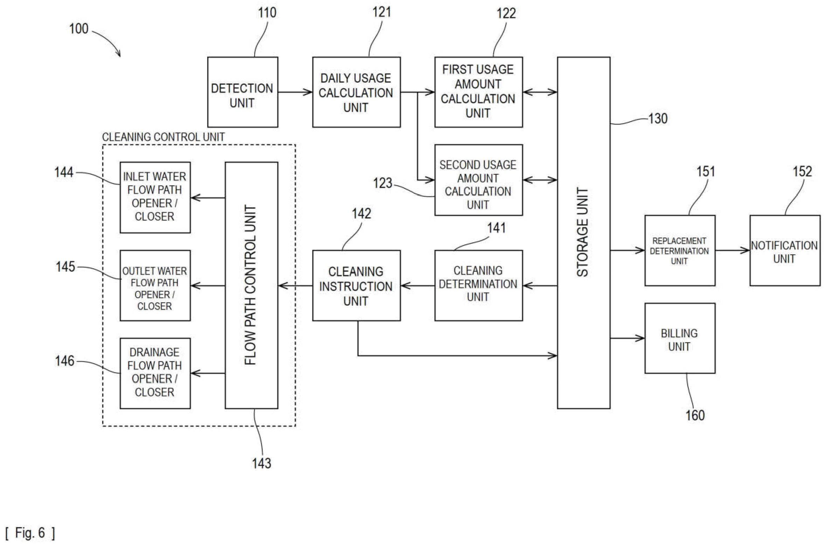

In the first flow path 13, an electric valve 21A for controlling the supply of raw water is provided between the branch point and the water purification cartridge 11 on one side. In the first flow path 13, an electric valve 21B for controlling the supply of raw water is provided between the branch point and the water purification cartridge 12 on the other side. In the second flow path 14, an electric valve 21C for controlling the discharge of cleaning water is provided. In the third flow path 15, an electric valve 21D for controlling the discharge of cleaning water is provided. In the fourth flow path 16, an electric valve 21E for controlling the outflow of purified water is provided between the junction and the outlet 20 of purified water. As illustrated in FIG. 3, the inputs of these plurality of electric valves 21 are electrically connected to the output of a microcomputer 22, and the electric valves 21 open and close in accordance with control signals output from the microcomputer 22. The electric valves 21A and 21B function as an inlet water flow path opener/closer 144 (FIG. 6) that opens and closes the inlet water flow path of raw water to the water purification cartridges 11 and 12. The electric valves 21C and 21D function as a drainage flow path opener/closer 146 (FIG. 6) that opens and closes the drainage flow path of cleaning water from the water purification cartridges 11 and 12. The electric valve 21E functions as an outlet water flow path opener/closer 145 (FIG. 6) that opens and closes the outlet water flow path of purified water from the water purification cartridges 11 and 12. The microcomputer 22 functions as a flow path control unit 143 (FIG. 6) that controls the flow paths 13, 14, 15, and 16 via the electric valves.

As illustrated in FIG. 2, the water purifier 10 also includes a flowmeter 23. This flowmeter 23 functions as a detection unit 110 (FIG. 6) that detects the flow rate of purified water, and is provided between the junction in the fourth flow path 16 and the outlet 20 for purified water. The flowmeter 23 of this embodiment outputs an analog signal corresponding to the flow rate of the purified water, and as illustrated in FIG. 3, the output of the flowmeter 23 is input to the microcomputer 22 via an analog-to-digital conversion circuit 24 (hereinafter referred to as "ADC 24"). If the flowmeter 23 outputs a digital signal indicating the flow rate, the ADC 24 is omitted and the output of the flowmeter 23 is input directly to the microcomputer 22.

The water purifier 10 includes the microcomputer 22 having a CPU and a memory inside the body of the water purifier 10. The memory stores a control program for controlling the water purifier 10 in advance, and the CPU executes the control program. The memory also stores a water purifier ID that is uniquely assigned to each water purifier 10.

The water purifier 10 includes a network module 25 connected to the microcomputer 22 so as to be communicable with the microcomputer 22. The network module 25 is installed inside the body of the water purifier 10, and wirelessly connects to a router installed indoors where the water purifier 10 is installed, thereby sending and receiving information to and from the server 50 via an internet communication line. The network module 25 may be a module that transmits and receives information via the internet communication line by wirelessly connecting to a base station provided by a communication carrier. This network module 25 transmits information input from the microcomputer 22 to the server 50 and inputs information received from the server 50 to the microcomputer 22.

The water purifier 10 configured as described above is installed in a user's home and communicates with the server 50 via an internet communication line.

### <Configuration of server 50>

The server 50 controls and manages the water purifier 10 of each user, and includes a network module, a CPU, and a memory.

The network module is wired to a router installed at the location where the server 50 is installed to send and receive information to and from the water purifier 10 and information terminal 30 via an internet communication line, and is electrically connected so that it can communicate with the CPU.

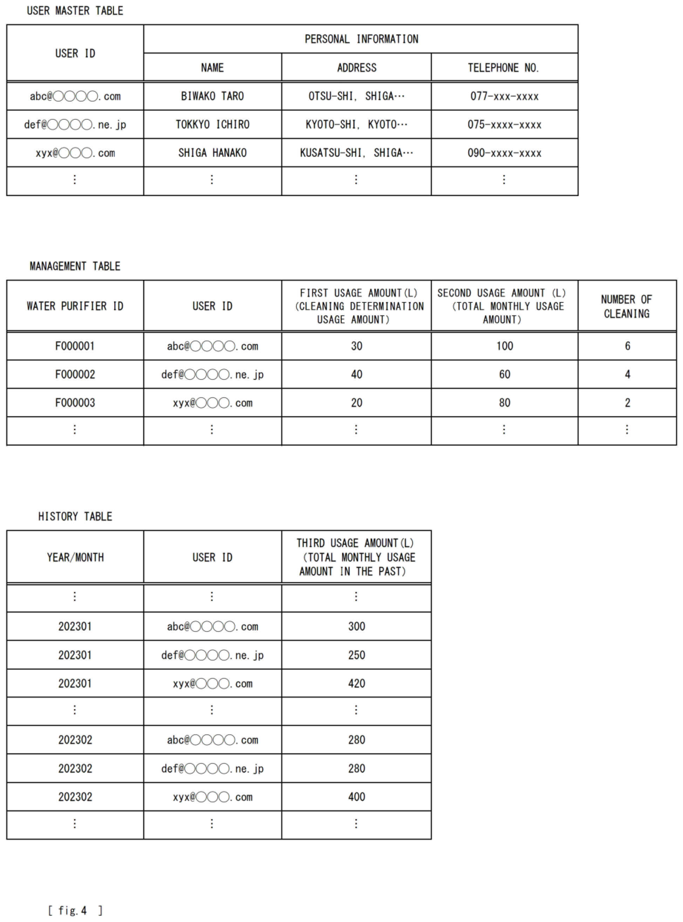

The memory of the server 50 stores a program for managing and controlling the water purifier 10, and the CPU of the server 50 executes the program. The memory of the server 50 is also provided with a database that functions as a storage unit 130 that stores information for managing the water purifier 10. As illustrated in FIG. 4, the database includes a user master table that stores personal information of a user, a management table that manages the usage status of the water purifier 10, and a history table that stores past usage history.

The user master table functions as a user information storage unit that stores user information, and has a record for each user. Here, the user information includes a user ID and personal information of the user associated with the user ID. The user ID is identification information to identify the user of this system, and in this embodiment, the e-mail address used by the user is registered in the user ID field. The personal information includes typically the user's name, address, and phone number. The name is registered in the name field. The address is registered in the address field. The phone number is registered in the phone number field. For example, when a user applies to use the system, the server 50 sends a form containing input items for each of these fields to the user's information terminal 30, to allow the user to initially register each piece of information in the user master table. Then, when the CPU of the server 50 receives input information (user information) for the form from the user's information terminal 30, it creates a new record and registers the user information corresponding to each field of the record.

The management table functions as a management information storage unit that stores management information, with a record for each water purifier 10. Here, the management information is for managing the water purifier 10, and includes a water purifier ID, a user ID associated with the water purifier ID, the amount of usage (first amount of usage and second amount of usage), and the number of times water is purified. The water purifier ID is identification information uniquely assigned to each water purifier 10, and is registered in the water purifier ID field. The user ID is of the user who uses the water purifier 10, and is registered in the user ID field. The first usage amount is information indicating the usage amount of the water purifier 10, and is used to determine whether cleaning is necessary. Hereinafter, the first usage amount will also be referred to as the "cleaning determination usage amount." The first usage amount is a value obtained by integrating the flow rate received from the water purifier 10, and the value is cleared every time a cleaning instruction, which will be described later, is transmitted to the water purifier 10. The first usage amount is registered in the first usage amount field. The second usage amount is the total usage amount of the water purifier 10 for month (hereinafter also referred to as "total monthly usage amount"), and is information that serves as the basis for billing the user for the usage fee. The second usage amount is a value obtained by integrating the flow rate received from the water purifier 10, and the value is cleared every time a billing process described below is executed. The second usage amount is registered in the second usage amount field. The number of cleaning is information indicating the number of times the water purification cartridges 11 and 12 have been cleaned, and is registered in the number of cleaning field. For example, when a user applies to use the system, the user inputs items in the form that allows the user to initially register the management information in the management table.

The history table functions as a usage history storage unit that stores the usage history of the water purifier 10. Here, the usage history refers to the total amount of purified water used by the user in the past years and months (hereinafter also referred to as the "third usage amount"), and includes a record provided for each year and month, and each user. Specifically, the usage history includes the year/month, the user ID, and the third usage amount. The year/month identifies the year and month and is registered in the year/month field. The user ID identifies the user and is registered in the user ID field. The third usage amount is the total amount of purified water used by the user in the past year and month, and is registered in the third usage amount field. In the history table, records corresponding to the number of users are generated on the closing date of each month. The year and month of the closing date is then stored in the year/month field of each generated record. Furthermore, the user ID stored in the management table and the second usage amount corresponding to the user ID are respectively stored in the user ID field and the third usage amount field of each generated record.

### <System flow>

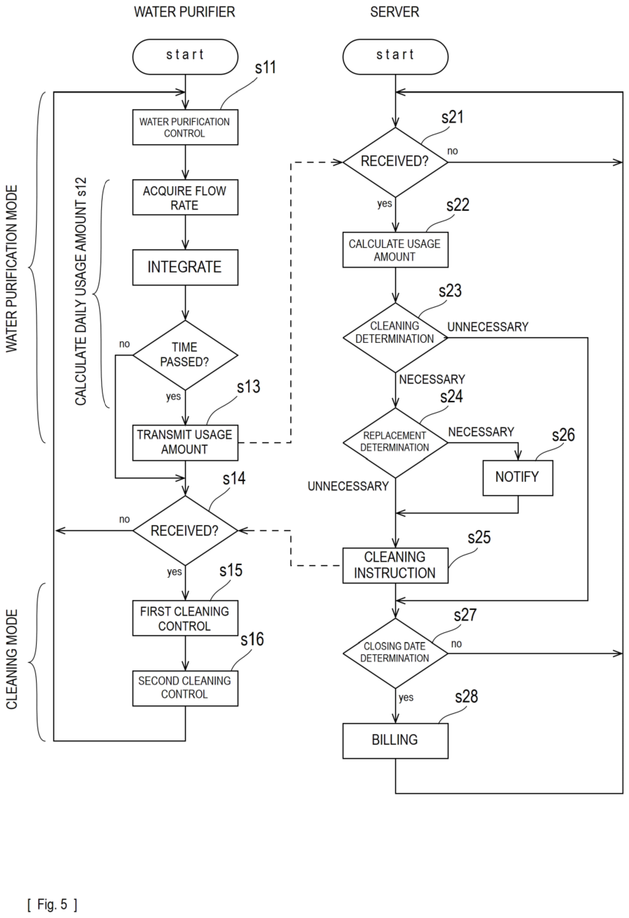

The purified water supply system 100 of this embodiment configured as described above is configured to clean the water purification cartridges 11 and 12 and charges a fee, on the basis of the amount of water used in the water purifier 10. Referring mainly to FIG. 5, the following describes the system flow.

As illustrated in FIG. 5, the water purifier 10 operates in a water purification mode and a cleaning mode. In the water purification mode, the water purifier generates purified water from raw water and supplies the purified water to the water purification faucet 4, and the microcomputer 22 of the water purifier 10 executes a water purification control process s11, a daily usage calculation process s12, and a usage amount transmission process s13.

The water purification control process s11 is for producing purified water by controlling each electric valve 21 provided in the flow path, and as illustrated in FIG. 2(a), the microcomputer 22 inputs control signals to the electric valves 21 so as to open the electric valve 21A, open the electric valve 21B, close the electric valve 21C, close the electric valve 21D, and open the electric valve 21E. Executing this water purification control process s11 causes the raw water supplied from the supply port 17 to pass through the first flow path 13 to the pair of water purification cartridges 11 and 12. As the raw water flows forward through the pair of water purification cartridges 11 and 12, dissolved substances in the raw water are reduced by the filter media, and purified water is produced. The purified water flows through the fourth flow path 16 and then flows out from the outlet 20. At this time, the purified water passes through the flowmeter 23, and the flow rate of the purified water is detected by the flowmeter 23.

The daily usage calculation process s12 is for calculating the usage amount (outflow amount) of purified water per day, and includes a flow rate acquisition process, an integration process, and a time check process.

The flow rate acquisition process is for acquiring the flow rate of purified water detected by the flowmeter 23, and the microcomputer 22 acquires the value output from the ADC 24.

The integration process is for integrating the acquired flow rate, and the microcomputer 22 adds the flow rate acquired in the flow rate acquisition process to an integrated value temporarily stored in the memory to calculate a new integrated value. Then, the microcomputer 22 stores the newly calculated integrated value in the memory.

The time check process is for checking whether a predetermined period of time has elapsed, and the microcomputer 22 counts down a counter set to 24 hours and checks whether the counter value has reached zero. If the counter value is not 0 (no), the predetermined period of time (24 hours) has not elapsed, so the process proceeds to a reception checking process s21. If the counter value reaches 0 (yes), the predetermined period of time (24 hours) has elapsed, so the usage amount transmission process s13 is executed. Thus, the microcomputer 22 functions as a daily usage calculation unit 121 (FIG. 6), which calculates the amount of purified water used per day.

The usage amount transmission process s13 is for transmitting the amount of purified water used using the network module 25, and the microcontroller 22 transmits the integrated value stored in the memory, that is, the amount used per day, to the server 50 together with the water purifier ID stored in the memory. In this way, the microcomputer 22 and the network module 25 function as a transmission unit (not illustrated) that transmits the amount of usage per day.

As described above, in the water purification mode, purified water is produced from raw water, and the amount of purified water used per day is calculated and transmitted to the server 50.

When the CPU of the server 50 receives the daily usage amount and the water purifier ID from the water purifier 10 (s21: yes), the CPU of the server 50 executes a usage amount calculation process s22. The usage amount calculation process s22 is for calculating the first usage amount (cleaning determination usage amount) and the second usage amount (total monthly usage amount). Specifically, the CPU of server 50 extracts the first usage amount and second usage amount corresponding to the received water purifier ID from the management table. Next, the CPU adds the usage amounts received from the water purifier 10 to the extracted first usage amount and second usage amount, thereby updating the first usage amount and second usage amount. Next, the CPU stores the updated first and second usage amounts in the management table as the first and second usage amounts corresponding to the water purifier ID. In this way, the server 50 functions as a reception unit (not illustrated) that receives the amount of water used per day from the water purifier 10. The server 50 also functions as a first usage amount calculation unit 122 (FIG. 6) that calculates a first usage amount on the basis of information obtained from the water purifier 10 and a second usage amount calculation unit 123 (FIG. 6) that calculates a second usage amount on the basis of information obtained from the water purifier 10.

The CPU of the server 50 executes a cleaning determination process s23 after executing the usage amount calculation process s22. The cleaning determination process s23 is for determining whether the water purification cartridges 11, 12 need to be cleaned (whether cleaning is necessary). Specifically, the CPU compares the first usage amount (cleaning determination usage amount) calculated in the usage amount calculation process s22 (stored in the management table) with a reference value. The reference value is determined based on the correlation between the amount of water purification cartridges 11 and 12 used and their water purification performance, and the amount of water purification cartridges 11, 12 used when the water purification performance has decreased to a predetermined level is determined as the reference value. As a result of this comparison, if the first usage amount (cleaning determination usage amount) is less than the reference value, it is considered that the water purification performance of the water purification cartridges 11 and 12 has not decreased to a predetermined level, and thus it is determined that cleaning of the water purification cartridges 11, 12 is unnecessary. As a result of the comparison, if the first usage amount (cleaning determination usage amount) exceeds the reference value, it is considered that the water purification performance of the water purification cartridges 11 and 12 has decreased to the predetermined level, and thus it is determined that cleaning of the water purification cartridges 11 and 12 is necessary. In this way, the server 50 functions as a cleaning determination unit 141 (FIG. 6) that determines whether cleaning of the water purification cartridges is necessary.

If the CPU of the server 50 determines in the cleaning determination process that cleaning is unnecessary (s23: unnecessary), it executes a closing date determination process s27, which will be described later.

If the CPU of the server 50 determines in the cleaning determination process s23 that cleaning is necessary (s23: necessary), it executes a replacement determination process s24. The replacement determination process s24 is for determining whether the water purification cartridges 11 and 12 need to be replaced (whether replacement is necessary). Specifically, the CPU extracts the number of cleaning corresponding to the received water purifier ID from the management table. If the number of cleaning is less than a reference value, the CPU determines that replacement of the water purification cartridges 11 and 12 is not necessary. If the number of cleaning is the reference value or more, the CPU determines that replacement of the water purification cartridges 11 and 12 is necessary. In this way, the server 50 functions as a replacement determination unit 151 (FIG. 6) that determines whether replacement of the water purification cartridges 11 and 12 is necessary.

If the CPU of the server 50 determines in the replacement determination process s24 that replacement is necessary (s24: necessary), it executes a notification process s26. The notification process s26 is for notifying the user (user's information terminal 30) that the water purification cartridges 11 and 12 need to be replaced, and for example, a message urging the user to replace the water purification cartridges 11 and 12 is sent to the user's email address. In this way, the server 50 functions as a notification unit 152 (FIG. 6) that notifies the user of the need to replace the water purification cartridges 11 and 12. After executing the notification process s26, the CPU of the server 50 executes a cleaning instruction process s25.

If the CPU of the server 50 determines in the replacement determination process s24 that replacement is unnecessary (s24: unnecessary) or after it executes the notification process s26, the CPU executes a cleaning instruction process s25. The cleaning instruction process s25 is for instructing the water purifier 10 to clean the water purification cartridges 11 and 12, and the CPU of the server 50 sends a cleaning instruction to the water purifier 10 that sent the usage amount, and counts up the value in the number of cleaning field corresponding to the water purifier ID. In this way, the server 50 functions as a cleaning instruction unit 142 (FIG. 6) that issues a cleaning instruction to the water purifier 10. After executing the cleaning instruction process s25, the CPU of the server 50 executes the closing date determination process s27, which will be described later.

When the water purifier 10 receives the cleaning instruction (s14: yes), it shifts from the water purification mode to the cleaning mode. The cleaning mode is for cleaning the pair of water purification cartridges 11 and 12, and the microcomputer 22 of the water purifier 10 executes a first cleaning control process s15 and a second cleaning control process s16.

The first cleaning control process s15 is for controlling the flow paths to clean the water purification cartridge 11 on one side, and in this embodiment, as illustrated in FIG. 2(b), control signals are input to the electric valves 21 so as to close the electric valve 21A, open the electric valve 21B, open the electric valve 21C, close the electric valve 21D, and close the electric valve 21E. Executing this first cleaning control process s15 causes the raw water supplied from the supply port 17 to pass through one side of the first flow path 13 to the water purification cartridge 12 on the other side. Then, the purified water (cleaning water) produced by flowing forward within the water purification cartridge 12 on the other side flows through the fourth flow path 16 toward the water purification cartridge 11 on one side and enters the water purification cartridge 11 through the secondary side port 11b. This cleaning water flows backward in the water purification cartridge 11 on one side and out of the primary side port 11a of the water purification cartridge 11 on one side. At this time, the dissolved substances adhering to the filter media of the water purification cartridge 11 on one side pass through the second flow path 14 together with the cleaning water and are discharged from the discharge port 18. In this way, each flow path controlled by the first cleaning control process functions as a cleaning unit that flows the purified water produced by the water purification cartridge 12 on the other side back from the secondary side to the primary side of the water purification cartridge 11 on one side, thus cleaning the water purification cartridge 11 on one side. The electric valves 21 functioning as a flow path opener/closer and the microcomputer 22 functioning as the flow path control unit 143 function as a cleaning control unit (FIG. 6) that controls the cleaning unit.

The second cleaning control process s16 is for controlling the flow paths to clean the water purification cartridge 12 on the other side, and in this embodiment, as illustrated in FIG. 2(c), control signals are input to the electric valves 21 so as to open the electric valve 21A, close the electric valve 21B, close the electric valve 21C, open the electric valve 21D, and close the electric valve 21E. Executing this second cleaning control process s16 causes the raw water supplied from the supply port 17 to pass through one side of the first flow path 13 to the water purification cartridge 11 on one side. Then, the purified water (cleaning water) produced by flowing forward within the water purification cartridge 11 on one side flows through the fourth flow path 16 toward the water purification cartridge 12 on the other side and enters the water purification cartridge 12 through the secondary side port 12b. This cleaning water flows backward in the second water purification cartridge 12 and out of the primary side port 12a of the second water purification cartridge 12. At this time, the dissolved substances adhering to the filter media of the second water purification cartridge pass through the third flow path 15 together with the cleaning water and are discharged from the discharge port 19. In this way, each flow path controlled by the second cleaning control process functions as a cleaning unit that flows the purified water produced by the water purification cartridge 11 on one side back from the secondary side to the primary side of the water purification cartridge 12 on the other side, thus cleaning the water purification cartridge 12 on the other side.

After executing the first cleaning control process s15 and the second cleaning control process s16, the microcomputer 22 executes the water purification control process s11.

As described above, the CPU of server 50 executes the closing date determination process s27 if it determines that cleaning is unnecessary in the cleaning determination process s23 (s23: unnecessary), after it executes the notification process s26, or after it executes the cleaning instruction process s25. The closing date determination process s27 is for determining whether the day on which the process is being executed is the closing date, and the CPU of the server 50 acquires the date and checks whether the acquired date matches the specified closing date. If the result of this checking indicates that it is not the closing date (s27: no), the process returns to the receiving process s21. If it is the closing date (s27: yes), the CPU of the server 50 executes a billing process s28.

The billing process s28 is for calculating the usage fee for the water purification cartridges 11 and 12 for the user and billing the user, and is executed on the closing date of each month. The method of calculating the usage fee is not particularly limited. Examples include a metered system in which the billing fee varies depending on the amount of purified water used per month, a flat-rate system in which a fixed monthly billing fee is charged, and a system in which only a basic fee is charged if the usage is below a specified amount, and an excess fee and a basic fee are charged if the usage exceeds the specified amount, in accordance with the excess amount. In this way, the server 50 functions as a billing unit 160 (FIG. 6) that determines the closing date, calculates the usage fee for the water purification cartridges 11 and 12, and bills the user for the usage fee. The billing process is not limited to the monthly closing date, but may be performed periodically, such as on the closing date of every other month. After the CPU of the server 50 executes the billing process s28, the process returns to the receiving process s21.

The purified water supply system 100 according to the present embodiment is configured to clean the pair of water purification cartridges 11 and 12 in accordance with a cleaning instruction from the server 50 if the amount of water used in the water purifier 10 reaches a predetermined amount. This makes it possible to extend the usable period of the water purification cartridges 11 and 12, and prevent an increase in running costs associated with replacing the water purification cartridges 11 and 12.

The purified water supply system 100 of this embodiment is configured to periodically execute the billing process s28, which allows the manufacturer of the purified water cartridges 11 and 12 to secure the profit. That is, the calculation standard for the fee is determined appropriately, which makes it possible to secure profits for the provider of the water purification cartridges 11 and 12 and prevent the running costs for the user from increasing.

Furthermore, the purified water supply system 100 of this embodiment is configured to send a notification to the information terminal 30 when the number of times the water purification cartridges 11, 12 have been cleaned reaches a predetermined number, thereby encouraging the user to replace the water purification cartridges. This allows the water purification cartridges with reduced water purification performance to be appropriately replaced, thereby maintaining the water purification performance of the water purifier 10.

### [Second Embodiment]

The purified water supply system of the second embodiment is similar to the first embodiment in that it includes a water purifier 10a, an information terminal 30, and a server 50, but differs from the first embodiment in that it determines whether cartridge cleaning is necessary based on the water pressure difference detected in the water purifier 10a. The following description will focus on configurations and flows that differ from those of the first embodiment, and descriptions of configurations and flows that are common to the first embodiment will be omitted as appropriate.

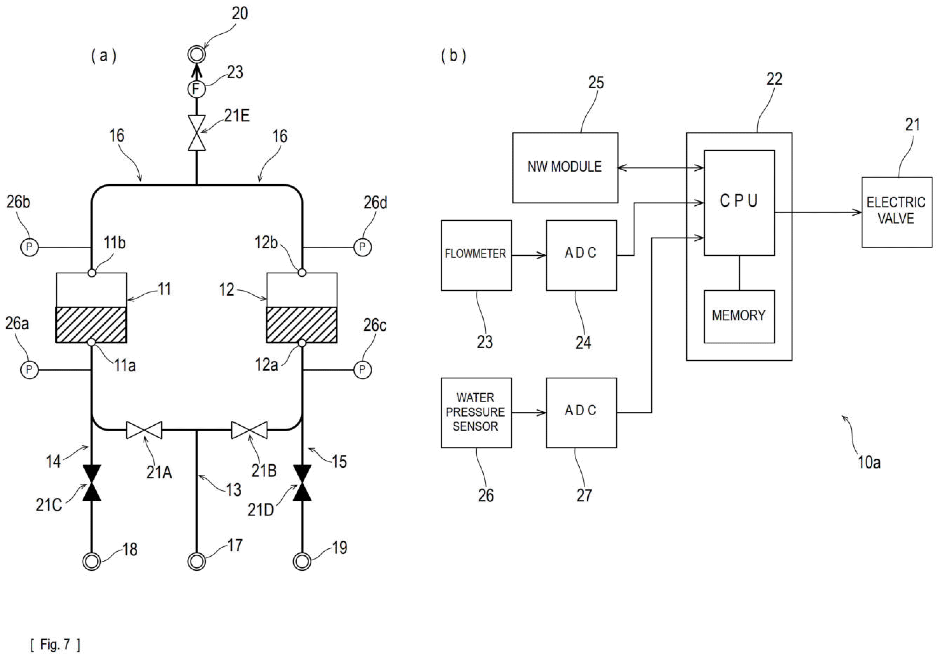

As illustrated in FIG. 7, the water purifier of the second embodiment includes water pressure sensors 26a, 26b, 26c, and 26d (hereinafter collectively referred to as "water pressure sensors 26") in the primary and secondary flow paths of the water purification cartridges 11 and 12. Each of the water pressure sensors 26 functions as a detection unit 110 that detects the water pressure at the installation location, and is connected to a microcomputer 22 via an ADC 27.

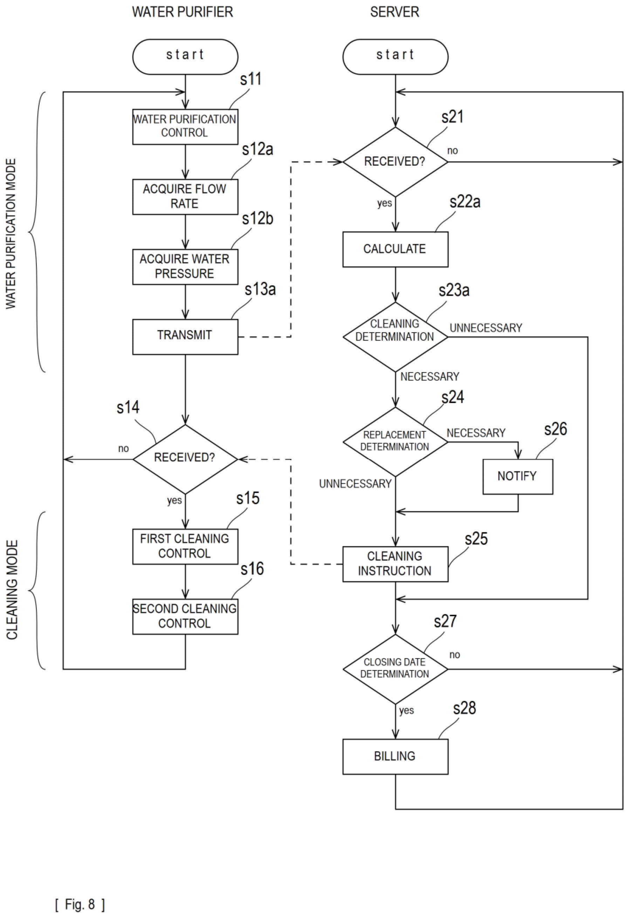

The system flow of this purified water supply system is described with reference to FIG. 8.

The water purifier 10 of this embodiment includes a flow rate acquisition process s12a, a water pressure acquisition process s12b, and a transmission process s13a, instead of the daily usage calculation process s12 and usage amount transmission process s13 in the first embodiment. The flow rate acquisition process s12a is the same as the flow rate acquisition process of the first embodiment. The water pressure acquisition process s12b is for acquiring the water pressure detected by each of the water pressure sensors 26, and the microcomputer 22 acquires the values output from the ADC 27. The transmission process 13a is for transmitting the flow rate acquired in the flow rate acquisition process s12a and the plurality of water pressures acquired in the water pressure acquisition process s12b to the server 50 together with the water purifier ID.

The server 50 of this embodiment executes a calculation process s22a instead of the usage amount calculation process s22 in the first embodiment. This calculation process includes a second usage amount (monthly usage amount) calculation process and a water pressure difference calculation process. The second usage amount calculation process is for calculating the second usage amount, and is calculated by the same process as in the first embodiment. The water pressure difference calculation process is for calculating the difference in water pressure (water pressure difference) between the primary side and secondary side of each water purification cartridge 11, 12, on the basis of the received water pressure values. Specifically, the water pressure difference in the water purification cartridge 11 on one side is calculated by subtracting the water pressure detected by the secondary water pressure sensor 26b from the water pressure detected by the primary water pressure sensor 26a of the water purification cartridge 11 on one side. Similarly, the water pressure difference in the water purification cartridge 12 on the other side is calculated by subtracting the water pressure detected by the secondary water pressure sensor 26d from the water pressure detected by the primary water pressure sensor 26c of the water purification cartridge 12 on the other side.

Furthermore, the server 50 of this embodiment executes a cleaning determination process s23a based on a water pressure difference, instead of the cleaning determination process s23 based on the usage amount in the first embodiment. In this cleaning determination process s23a, the water pressure difference calculated in the above water pressure difference calculation process is compared with a reference value. The reference value is determined based on the correlation between the water pressure difference and the water purification performance of the water purification cartridges 11 and 12, and the water pressure difference when the water purification performance has decreased to a predetermined level is determined as the reference value.

As a result of this comparison, if the water pressure difference does not exceed the reference value, it is considered that the water purification performance of the water purification cartridges 11 and 12 has not decreased to a predetermined level, and thus it is determined that cleaning of the water purification cartridges 11 and 12 is unnecessary. In this way, if it is determined that cleaning is unnecessary (s23a: unnecessary), the server 50 executes a closing date determination process s27.

As a result of the comparison, if the water pressure difference exceeds the reference value, it is considered that the water purification performance of the water purification cartridges 11 and 12 has decreased to the predetermined level, and thus it is determined that cleaning of the water purification cartridges 11 and 12 is necessary. In this way, if it is determined that cleaning is necessary (s23a: necessary), the server 50 executes a replacement determination process s24.

The purified water supply system 100 of this embodiment is configured so that, if the water pressure difference detected in the water purifier 10 reaches a reference value, the pair of water purification cartridges 11 and 12 are cleaned based on a cleaning instruction from the server 50. This makes it possible to extend the usable period of the water purification cartridges 11 and 12, and prevent an increase in running costs associated with replacing the water purification cartridges 11 and 12.

That is the descriptions on the embodiments of the present invention. The present invention is not limited to these embodiments, and may be modified as follows.

### <Modification Example 1>

In the first and second embodiments, the server 50 may transmit a cleaning instruction to the water purifier 10 based on the time of day. In this modified embodiment, the CPU of the server 50 acquires the current time in the cleaning determination process s23, s23a, and checks whether the acquired current time is a predetermined time or whether the predetermined time has passed. Preferably, the predetermined time is nighttime when the user does not use purified water or a time when the user is not present, for example. If the result of this check shows that the current time has not yet reached the predetermined time, it is determined that cleaning is not necessary. If it is the predetermined time or if the predetermined time has passed, it is determined that cleaning is necessary. According to this modified embodiment, the water purification cartridges 11 and 12 can be cleaned periodically.

### <Modification Example 2>

In the first and second embodiments, the microcomputer 22 of the water purifier 10, 10a executes both the first cleaning control process s15 and the second cleaning control process s16 each time it receives a cleaning instruction. The present invention is not limited to these embodiments. For instance, the microcomputer 22 may execute one of the cleaning control processes when it receives a cleaning instruction for the water purifier 10, and execute the other cleaning control process when it next receives a cleaning instruction.

### <Modification Example 3>

In the first embodiment, the server 50 may calculate the amount of purified water used per day. In this modified embodiment, the microcomputer 22 of the water purifier 10 executes a flow rate transmission process after executing the flow rate acquisition process. The flow rate transmission process is for transmitting the flow rate to the server 50 every time the flow rate is acquired in the flow rate acquisition process. The CPU of the server 50 receives the flow rate from the water purifier 10 in the receiving process s21. Then, the CPU of the server 50 integrates the received flow rate in the usage amount calculation process s22. In this modified embodiment, the server 50 is able to collectively manage cleaning determination based on the amount of usage, replacement determination, and billing in real time.

### <Modification Example 4>

In the first embodiment, the server 50 calculates the first usage amount, but the water purifier 10 may calculate the first usage amount. Specifically, the microcomputer 22 stores the first usage amount in the memory, and adds the usage amount calculated in the integration process to the first usage amount to update the first usage amount. The updated first usage amount is stored in the memory each time.

### <Modification Example 5>

In the first and second embodiments, the microcomputer 22 of the water purifier 10, 10a may execute the replacement determination process s24 and the notification process s26. In this modified embodiment, the microcomputer 22 stores the number of cleanings in its memory, and counts up the number of cleanings every time it receives a cleaning instruction from the server 50. Then, the water purifier 10, 10a includes a replacement lamp electrically connected to the microcomputer 22, and the microcomputer 22 controls the lighting of this lamp if this number of cleanings reaches a predetermined number.

### <Modification Example 6>

In the first and second embodiments, the replacement determination process s24 may determine whether replacement is necessary based on the expiration date of the water purification cartridges 11 and 12. In this modified embodiment, an expiration date field is provided in the management table. The expiration date field stores the date by which the water purification cartridges can maintain a predetermined cleaning performance, i.e., the expiration date. Then, in the exchange determination process s24, the CPU of the server 50 acquires the current date and compares the acquired current date with the expiration date. As a result of the comparison, the CPU of the server 50 determines that replacement is not necessary if the current date is before the expiration date, and determines that replacement is necessary if the current date has passed the expiration date.

### <Modification Example 7>

In the second embodiment, the water pressure sensor 26 may be replaced with a water quality sensor. The water quality sensor functions as a detection unit 110 that detects the water quality of the raw water/purified water flowing through the flow paths on the basis of electrical conductivity, turbidity, and other factors, and is placed in the primary and secondary flow paths of each water purification cartridge 11, 12. In this modified embodiment, the microcomputer 22 of the water purifier 10 executes a water quality acquisition process instead of the water pressure acquisition process s12b. In the water quality acquisition process, values (hereinafter referred to as "water quality values") indicating the water quality are acquired from the water quality sensors. Then, in a transmission process s13a, the water quality values are transmitted to the server 50 together with the flow rate.

The server 50 receives the water quality in the receiving process s21, and calculates the water quality difference in the calculation process S22a. This water quality difference is calculated by subtracting the water quality value by the water quality sensor placed in the secondary flow path from the water quality value by the water quality sensor placed in the primary flow path of each water purification cartridge 11, 12. Then, the server 50 compares the water quality difference with a reference value in the cleaning determination process s23a. As a result of this comparison, if the water quality difference does not exceed a reference value, it is considered that the cleaning performance of the water purification cartridges 11, 12 has not decreased to a predetermined level, and thus it is determined that cleaning of the water purification cartridges 11, 12 is unnecessary (s23a: unnecessary). As a result of this comparison, if the water quality difference exceeds the reference value, it is considered that the cleaning performance of the water purification cartridges 11, 12 has decreased to the predetermined level, and thus it is determined that cleaning of the water purification cartridges 11, 12 is necessary (s23a: necessary).

### <Modification Example 8>

In the second embodiment and modification example 7, the detection unit 110 (water pressure sensor, water quality sensor) is provided in the primary flow path and secondary flow path of each water purification cartridge 11, 12. The present invention is not limited to these embodiments. For instance, the detection unit 110 may be provided only in the secondary flow path of each water purification cartridge 11, 12. In this modified embodiment, the water purifier 10a acquires the value detected by the detection unit 110 and transmits the acquired value to the server 50. Then, in the cleaning determination process s23a, the server 50 compares the value by the detection unit 110, which is received from the water purifier 10a, with a reference value to determine whether the cleaning is necessary.

### <Modification Example 9>

In the modification example 8, the detection unit 110 is provided only in the secondary flow path of each water purification cartridge 11, 12. The present invention is not limited to the embodiment, and the detection unit 110 may be provided only in the primary flow path of each water purification cartridge 11, 12. For instance, a flow velocity sensor may be provided in the primary flow path of each water purification cartridge 11, 12. The flow velocity sensor functions as a detection unit 110 that detects the flow velocity of raw water. In this modified embodiment, the water purifier 10a executes a flow velocity acquisition process instead of the water pressure acquisition process s12a. The flow velocity acquisition process is for acquiring a value indicating the flow velocity (hereinafter referred to as a "flow velocity value") from each flow velocity sensor. Then, in a transmission process s13a, the flow velocity values are transmitted to the server 50 together with the flow rate. In the cleaning determination process s23a, the server 50 compares the flow velocity value received from the water purifier 10a with a reference value to determine whether the cleaning is necessary.

The flow velocity sensor may be composed of a flowmeter and a water pressure sensor, and the flow velocity may be calculated from the flow rate detected by the flowmeter and the water pressure detected by the water pressure sensor. That is, the flow velocity may be calculated by multiplying the detected flow rate by the reciprocal of the detected water pressure.

### <Modification Example 10>

In the first embodiment, the second embodiment, and modification examples 7 to 9, a flowmeter, a water pressure sensor, a water quality sensor, and a flow velocity sensor are used as the detection unit 110. The present invention is not limited to these embodiments, and the detection unit 110 may be any unit that detects index values that indicate the state of raw water or purified water.

### <Modification Example 11>

In the cleaning determination processes s23 and s23a (cleaning determination unit 1441) of the first and second embodiments, a reference value is used to determine whether cleaning is necessary. The present invention is not limited to these embodiments, and the need for cleaning may be determined using machine learning. In this modified embodiment, supervised learning is performed in advance to generate a trained model. The training data uses the index value detected by the detection unit 110 as input data, and the need for cleaning for the index value as correct data. Then, in the cleaning determination process s23, s23a, the index value received from the water purifier 10, 10a is input into the trained model, and the trained model outputs whether the cleaning is necessary.

### <Modification Example 12>

In the first and second embodiments, the cleaning structure may be changed according to the type of filter media that the water purification cartridges 11 and 12 have. Here, the cleaning of the filter media in the present invention also includes regeneration of the filter media. For instance, it is known that activated carbon can be regenerated by applying heat to the activated carbon to remove substances adhering to the activated carbon. Therefore, when activated carbon is used as the filter media, the embodiment may include a heater that functions as a cleaning unit that applies heat to the activated carbon to regenerate the activated carbon, and a microcomputer 22 that functions as a cleaning control unit that controls the heater based on a cleaning instruction. Furthermore, the embodiment may include, as a cleaning unit that applies heat to the filter media to clean (regenerate) it, an electromagnetic wave irradiation device, a steam generator, or a hot water generator, for instance. In addition, the cleaning unit may be any unit that is capable of cleaning the filter media whose water purification performance has deteriorated and restore the water purification performance, and may be a chemical supply unit that has the function of supplying chemicals (e.g., alkaline ionized water, acid, alkali, salt water, and surfactant) to the filter media, a vibration unit that applies vibrations, or a bubble generation unit that generates bubbles and supplies them to the filter media, for instance.

### <Modification Example 13>

In the first and second embodiments, the replacement determination process s24 and the notification process s26 are optional processes, and these processes may be omitted.

### <Modification Example 14>

In the first and second embodiments, the closing date determination process s27 and the billing process s28 are optional processes, and these processes may be omitted. For instance, a water supply system may include a water vending machine that has the above water purifier 10, 10a and sells the purified water produced by the water purifier 10, 10a, and the above server 50. This water vending machine may sell purified water in an amount corresponding to the amount of payment by cash, smart phone payment, or prepaid card.

### <Modification Example 15>

The water purifier 10, 10a of the first and second embodiments may be used for commercial purposes in stores such as restaurants, factories, farms, and other similar places.

### Reference Signs List

- 100: Purified water supply system
- 10: Water purifier
- 11: Water purification cartridge
- 12: Water purification cartridge
- 21: Electric valve
- 22: Microcomputer
- 23: Flowmeter
- 30: Mobile terminal
- 50: Server

## Claims

1. A purified water supply system comprising: a purification unit that reduces dissolved substances in raw water and allows purified water to flow out;
a cleaning unit that performs cleaning of the purification unit;
a cleaning determination unit that determines whether the cleaning is necessary; and
a cleaning control unit that controls the cleaning unit on a basis of a result of the cleaning determination unit.

2. The purified water supply system according to claim 1, further comprising a water purifier and a server capable of communicating with the water purifier,
wherein
the water purifier includes
the purification unit,
the cleaning unit,
the cleaning control unit, and
a detection unit that outputs a flow rate of the purified water,
the server includes:
the cleaning determination unit;
a cleaning instruction unit that issues an instruction to the water purifier that has determined that cleaning is necessary to clean the purification unit; and
a calculation unit that calculates a usage fee for the purification unit of the water purifier on a basis of an integrated value of the flow rate of the water purifier, and
the cleaning control unit controls the cleaning unit on a basis of the instruction.

3. The purified water supply system according to claim 2, wherein the server includes a replacement determination unit that determines whether the purification unit is to be replaced.

4. The purified water supply system according to claim 2, wherein the cleaning control unit controls supply of purified water to a secondary side of the purification unit and controls discharge of water flowing out from a primary side of the cleaning unit.

5. The purified water supply system according to claim 1, further comprising a detection unit that outputs an index value indicating a state of the raw water and/or the purified water, wherein
the cleaning determination unit determines whether the cleaning is necessary based on the index value.

6. The purified water supply system according to claim 5, wherein the detection unit outputs a flow rate of the purified water, and
the purified water supply system further comprises a calculation unit that calculates a usage fee for the purification unit on a basis of an integrated value of the output flow rate.

7. The purified water supply system according to claim 5, wherein the detection unit includes:
a primary-side water pressure sensor that outputs a primary-side water pressure of the purification unit; and
a secondary-side water pressure sensor that outputs a secondary-side water pressure of the purification unit,
wherein
the cleaning determination unit determines whether the cleaning is necessary based on a difference between the primary-side water pressure and the secondary-side water pressure.

8. The purified water supply system according to claim 1, further comprising a replacement determination unit that determines whether the purification unit is to be replaced.

9. The purified water supply system according to claim 1, wherein the cleaning control unit controls supply of purified water to a secondary side of the purification unit and controls discharge of water flowing out from a primary side of the cleaning unit.

10. The purified water supply system according to claim 1, further comprising a plurality of water purifiers; and
a server capable of communicating with each of the plurality of water purifiers,
wherein
each of the water purifiers includes the purification unit, the cleaning unit, and the cleaning control unit, and
the server includes the cleaning determination unit.

11. A method for supplying purified water, comprising: a purification step performed by a purification unit of a water purifier to reduce dissolved substances in raw water and allows purified water to flow out;
a cleaning step performed by a cleaning unit of the water purifier to perform cleaning of the purification unit;
a cleaning determination step performed by a cleaning determination unit that a server communicable with the water purifier has to determine whether the cleaning is necessary; and
a cleaning control step performed by a cleaning control unit of the water purifier to control the cleaning unit based on a result of the cleaning determination step.
